# EUROPEAN PATENT APPLICATION

(11) **EP 1 566 388 A1**
(43) Date of publication of application: **24.08.2005**
(21) Application number: 04075542.3
(22) Date of filing: 19.02.2004
(51) Int. Cl.: C08B 31/12, C08B 37/00, C08B 11/14, C08B 11/145

(54) **Cationic carbohydrate polymers, their use and a process for their preparation**

(71) Applicant: Nederlandse Organisatie voor Toegepast-Natuurwetenschappelijk Onderzoek TNO, 2628 VK Delft (NL)
(72) Inventor: Timmermans, Johannes Wilhelmus, 6714 GG Ede (NL); Slaghek, Theodoor Maximiliaan, 3042 HT Rotterdam (NL)
(74) Representative: Prins, Adrianus Willem

(57) **Abstract**

The invention provides a cationic carbohydrate polymer having a degree of substitution in the range of from 0.1 to 0.6 and an average molecular weight greater than 1000 and less than or equal to 4000 kD, and a process for preparing the same. Said carbohydrate polymer can be used as a flocculant for dewatering sludges or removing constituents from solutions.

## Description

The present invention relates to cationic carbohydrate polymers, their use as a flocculant to dewater sludges or to remove constituents from solutions, and a process for preparing said carbohydrate polymers.

Flocculants are anionic, cationic, amphoteric polymers, or blends of these polymers, and used in a variety of water treatments. These charged polymers clarify suspensions because they allow suspended matter to form large particles that can subsequently be removed from the suspension by for instance sedimentation or filtration. Anionic and cationic polymers are used for different applications that mainly depend on the electrical charges surrounding the suspended matter. Commonly used flocculants are random copolymers of acrylic acid and acrylamide. These flocculants are attractive since only very small amounts need to be used to clarify suspensions in an effective manner. For various applications these synthetic flocculants are, however, not suitable because they are not biologically degradable. This is especially a problem for particular applications such as the treatment of sludge, because the sludge so obtained cannot be used as fertilizer in agriculture. Various approaches have been suggested to deal with this problem.

It has been suggested for instance to graft synthetic polymers onto natural polymers such as carboxymethyl cellulose, starch, alginates and gums (see for instance Singh et al in Polymer Engineering and Science, January 2000, volume 40, 46 - 60). However, such systems have the drawback that the natural polymers can only be dissolved in low concentrations in order to synthesize the flocculants. In addition, they still contain substantial amounts of polymers that are not biologically degradable.

Surprisingly, it has now been found that an attractive unique category of flocculants can be developed which solve the above problem, when use is made of a new class of carbohydrate polymers as base material.

Accordingly, the present invention relates to a cationic carbohydrate polymer having a degree of substitution in the range of from 0.6 to 3 and an average molecular weight greater than 1000 and less or equal to 4000 kD.

Flocculants which comprise such cationic carbohydrate polymer display very attractive flocculation properties. Moreover, sludge treated with such flocculant can conveniently be used as fertilizer in agriculture since the carbohydrate polymers are biodegradable.

The degree of substitution represents the average number of substituted hydroxyl groups on each monomer unit of the carbohydrate polymer.

The cationic carbohydrate polymer has a degree of substitution in the range of from 0.6 to 3, preferably in the range of from 0.7 to 2.5, and more preferred 0.8 to 2.2. The degree of substitution can suitably be determined by known methods including measurement of nitrogen content.

The carbohydrate polymers according to the present invention preferably have an average molecular weight greater than 1000 and less than or equal to 4000 kD, preferably in the range of from 1200 to 3500 kD, and more preferably in the range of from 1500 to 3000 kD. The average molecular weight can suitably be determined by means of established techniques using an HPLC system.

The present invention also relates to a flocculant comprising a carbohydrate polymer according to the present invention. Such a flocculant may in addition to the carbohydrate polymer comprise any other known flocculant formulation and/or additive component.

Suitably, the carbohydrate polymer is present in an amount of from 10 to 100 weight percent, based on total dry flocculant (i.e. without water), preferably in the range of from 20 to 95, based on total dry flocculant.

Suitably, the cationic carbohydrate polymers according to the present invention may comprise a network of (cross)linked carbohydrate polymers. Preferably, the carbohydrate polymers according to the present invention have a crosslinking degree of at least 0.01%. More preferably, in the range of from 0.01 to 5 %, and most preferably in the range of from 0.05 to 4 %.

The carbohydrate polymers according to the present invention can suitably be made by contacting a carbohydrate having an average molecular weight greater than 1000 and less than or equal to 4000 kD in an aqueous environment having a pH of at least 10 with a cationic reactant which is applied in an amount of 5 to 50 wt.%, based on total weight of the mixture. Preferably, the carbohydrate to be contacted has an average molecular weight in the range of from 1200 to 3500 kD, more preferably in the range of from 1500 to 3000 kD.

Preferably, the aqueous environment has a pH of at least 10,5, more preferably of at least 11.

Preferably, the cationic reactant is applied in an amount of from 5 to 50 wt.%, based on total weight of the mixture, more preferably, in the range of from 10 to 45 wt.%, based on total weight of the mixture. 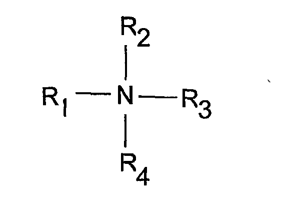 wherein R₁ is a carbon chain comprising 1 to 18 carbon atoms of which at least one carbon atom has been functionalised in such a way that it can be linked to a functional group of a carbohydrate polymer, and R₂, R₃, and R₄ are independently hydrogen or a carbon chain comprising 1 to 18 carbon atoms.

One or more of the carbon atoms of R₂, R₃, and R₄ may have been functionalised in such a way that it can be linked to a functional group of a carbohydrate polymer, but this is not necessary. Actually, R₂, R₃, and R₄ do preferably not contain a functionalised carbon atom.

The carbon chains of R1-R4 can be saturated or unsaturated, straight or branched.

At least one of the carbon atoms of R₁ has been functionalised so as to enable it to link to a functional group of a carbohydrate polymer. Such functional groups include for instance hydroxyl and/or amino groups. The methyl groups can for instance be functionalised by means of an epoxy and/or halogen compound.

Although a mixture of two or more types of cationic reactants can be used in the process according to the present invention, in practice it is preferred to use one type of cationic reactant.

The process according to the present invention can suitably be carried out at a temperature in the range of from 20 to 110°C. Preferably, the process according to the present invention is carried out at a temperature in the range of from 35 to 95°C, more preferably in the range of from 45 to 80°C.

The process according to the present invention is suitably carried out over a period of time in the range of from 5 minutes to 24 hours. Preferably, the process is carried over a period of time in the range of from 15 minutes to 10 hours, more preferably over a period of time in the range of from 30 to 120 minutes.
The process according to the present invention can suitably be carried out in any reactor suitable for carrying out a polymerisation reaction.

The carbohydrate polymers according to the present invention are made of carbohydrates having an average molecular weight greater than 1000 and less than or equal to 4000 kD. Suitable carbohydrates include natural carbohydrates such a starch (amylose, amylopectine), cellulose, gums, and derivates thereof. Suitably, use can be made of a mixture of two or more types of carbohydrates. However, preferably use is made of one type of carbohydrate. Preferably, oligo- or polymers of carbohydrates selected from the group consisting of glucose, fructose, mannose, xylose, arabinose and galactose. Preferably, the carbohydrates are selected from the groups consisting of glucose, galactose, mannose and/or xylose.

The present invention also relates to the use of a cationic carbohydrate polymer according to the present invention as a flocculant.

The cationic carbohydrate polymers according to the present inventions can very attractively be used in a variety of water treatments. Suitable water treatments include the treatment of surface water, industrial wastewater, municipal wastewater, and the dewatering of sludge. The present flocculants are especially effective in the treatment of industrial wastewater and municipal wastewater, and the dewatering of sludge. The flocculants in accordance with the present invention are useful for dewatering sludge, because they are biodegradable, allowing that the treated sludge can subsequently be used as fertilizer in agriculture and for removal of particles such as proteins, fibres, clay, and metal containing ores.

The present invention therefore also relates to a method for removing at least one constituent from a solution which comprises mixing said solution with 1 to 200 ppm of a flocculant according to the present invention, based on total mixture, and subsequently separating the constituent to be removed from the liquid mixture so obtained.

As indicated before a variety of wastewater streams can suitably be treated with the present flocculants. Preferably, however, industrial wastewater and municipal wastewater are treated with the flocculants according to the present invention.

Further, the present invention also provides a method for dewatering a sludge that comprises water, which method comprises contacting the sludge with a solution resulting in a concentration of 1 to 200 ppm of a flocculant in sludge according to the present invention, based on total mixture, and separating water from the remaining sludge.

The sludge can be anything resembling a slurry, mud or a slush. A variety of sludges can suitably be dewatered with the dewatering method of the present invention. Such sludges include biological sludges, industrial sludges en various residual sludges.

### Examples

### Preparation of Cationic Carbohydrate Polymer

To a solution of 400 ml distilled water containing 4 g NaOH, 100 g partially hydrolysed starch having an average molecular weight of 2500 kD was slowly added while stirring vigorously. When homogeneity was reached, 250 ml of glycidyltrimethylammonium chloride (68% purity and density 1.13) was slowly added. Subsequently the reaction vessel was put in an oil bath at 70°C for 2 hours. Then the reaction product was cooled down to room temperature and the product is precipitated by adding ethanol. The precipitate was subsequently isolated and redissolved in water and again precipitated with via addition of ethanol. The precipitate was collected, dissolved in water and lyophilised. Analyses of nitrogen content of the product indicate that the %N was 4.98 indicating a degree of substitution of 0.99.

### Flocculating properties test:

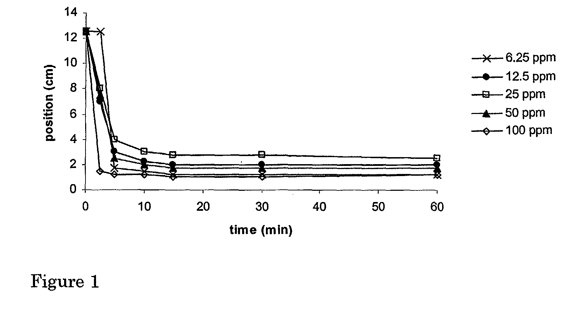

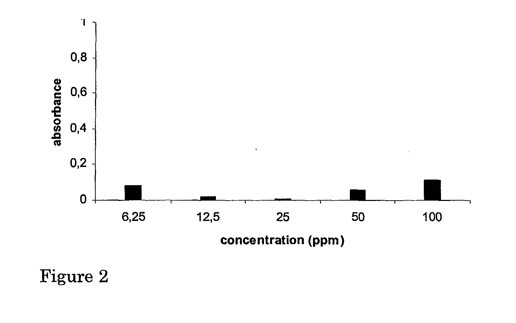

The experiment consisted in observing the position of the flocculated material in the sample tube at fixed times. Five sample tubes were filled with 18 ml bentonite suspension (1/3 g/l) each, and different amounts of flocculant solution were added to each one in order to have the following concentrations: 6.25, 12.5, 25, 50 and 100 ppm. The tubes were vigorously shaken and flocs were formed. The position of the line separating the flocculated material from the clear supernatant liquid was followed after 2.5, 5, 15, 30 and 60 min and after 12 h. A sample of the supernatant liquid was taken after 1 hour to measure its absorbance (at 285 nm).
Plots of the position of the flocculated matter against time and of the supernatant absorbance for each concentration are shown in Figures 1 and 2.

From Figures 1 and 2 it will be clear that the cationic carbohydrate polymers in accordance with the present invention can very attractively be applied as water treatment chemicals.

## Claims

1. A cationic carbohydrate polymer having a degree of substitution in the range of from 0.6 to 3 and an average molecular weight greater than 1000 and less than or equal to 4000 kD.

2. A carbohydrate polymer according to claim 1, having a degree of substitution in the range of from 0.7 to 2.5.

3. A carbohydrate polymer according to claim 2, having a degree of substitution in the range of from 0.8 to 2.3.

4. A carbohydrate polymer according to any one of claims 1-3, having an average molecular weight in the range of from 1200 to 3500 kD.

5. A carbohydrate polymer according to claim 4, having an average molecular weight in the range of from 1500 to 3000 kD.

6. A carbohydrate polymer according to any one claims 1-5, having a crosslinking degree of at least 0.01%.

7. A carbohydrate polymer according to claim 6, having a crosslinking degree in the range of from 0.05 to 4%.

8. A flocculant comprising a carbohydrate polymer according to any one of claims 1-7.

9. A flocculant according to claim 8, wherein the flocculant further comprises a further flocculant formulation and/or an additive component.

10. A flocculant according to according to claim 8 or 9, wherein the carbohydrate polymer is present in an amount of from 1 to 200 ppm, based on total flocculant.

11. A process for preparing a cationic carbohydrate polymer according to claim 1, which comprises contacting a carbohydrate having an average molecular weight in the range of from 1000 to 4000 kD in an aqueous environment having a pH of at least 10 with a cationic reactant which is applied in an amount of 5 to 50 wt.%, based on total weight of mixture.

12. A process according to claim 11, wherein the carbohydrate to be contacted has an average molecular weight in the range of from 1200 to 3500 kD.

13. A process according to claim 12, wherein the carbohydrate has an average molecular weight in the range of from 1500 to 3000 kD.

14. A process according to any one of claims 11-13, wherein the aqueous environment has a pH of at least 10,5.

15. A process according to claim 14, wherein the aqueous environment has a pH of at least 11.

16. A process according to any one of claims 11-15, wherein the cationic reactant is applied in an amount of from 5 to 50 wt.%, based on total weight of mixture.

17. A process according to claim 16, wherein the cationic reactant is applied in an amount of from 10 to 45 wt.%, based on total weight of mixture.

18. A process according to any one of claims 17, wherein the cationic reactant has the general formula: 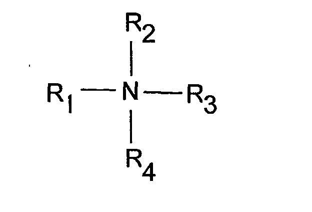 wherein R₁ is a carbon chain comprising 1 to 18 carbon atoms of at least one carbon atom has been functionalised in such a way that it can be linked to a functional group of a carbohydrate polymer, and R₂, R₃, and R₄ are independently hydrogen or a carbon chain comprising 1 to 18 carbon atoms.

19. Use of a cationic carbohydrate polymer according to any one of claims 1-7 as a flocculant.

20. A method for removing at least one constituent from a solution which comprises mixing said solution with 1 to 200 ppm of a flocculant according to any one of claims 8-10, based on total mixture, and subsequently separating the constituent to be removed from the liquid mixture so obtained.

21. A method for dewatering a sludge that comprises water, which method comprises contacting the sludge with 1 to 200 ppm of a flocculant according to any one of claims 8-11, based on total mixture, and separating water from the remaining sludge.
